(19) Europäisches Patentamt
European Patent Office
Office européen des brevets

(11) **EP 4 112 562 A1**

(12) **EUROPEAN PATENT APPLICATION**

(43) Date of publication:
**04.01.2023 Bulletin 2023/01**

(21) Application number: **22181974.1**

(22) Date of filing: **29.06.2022**

(51) International Patent Classification (IPC):
*C01G 53/04* (2006.01)   *H01M 4/505* (2010.01)
*H01M 4/525* (2010.01)   *H01M 10/0525* (2010.01)

(52) Cooperative Patent Classification (CPC):
**C01G 53/04; H01M 4/505; H01M 4/525;**
**H01M 10/0525;** C01P 2002/52; C01P 2004/03;
C01P 2004/50; C01P 2004/60; C01P 2004/61;
C01P 2006/16; C01P 2006/40

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.06.2021 KR 20210084965**
**21.06.2022 KR 20220075679**

(71) Applicant: **Samsung SDI Co., Ltd.**
**Yongin-si, Gyeonggi-do 17084 (KR)**

(72) Inventors:
• **KANG, Byungwuk**
**17084 Yongin-si (KR)**
• **YANG, Wooyoung**
**17084 Yongin-si (KR)**
• **CHOI, Ickkyu**
**17084 Yongin-si (KR)**

(74) Representative: **Marks & Clerk LLP**
**15 Fetter Lane**
**London EC4A 1BW (GB)**

(54) **POSITIVE ACTIVE MATERIAL FOR LITHIUM SECONDARY BATTERY, METHOD OF PREPARING POSITIVE ACTIVE MATERIAL, POSITIVE ELECTRODE FOR LITHIUM SECONDARY BATTERY INCLUDING POSITIVE ACTIVE MATERIAL, AND LITHIUM SECONDARY BATTERY INCLUDING POSITIVE ELECTRODE INCLUDING POSITIVE ACTIVE MATERIAL**

(57)     Provided are a positive active material for a lithium secondary battery, a method of preparing the positive active material, a positive electrode for a lithium secondary battery including the positive active material, and a lithium secondary battery including a positive electrode including the positive active material, in which the positive active material includes a nickel-based lithium metal oxide secondary particle including a plurality of large primary particles, the nickel-based lithium metal oxide secondary particle has a hollow structure having a pore inside, a size of each of the large primary particles is in a range of about 2 micrometers ($\mu$m) to about 6 $\mu$m, and a size of the nickel-based lithium metal oxide secondary particle is in a range of about 10 $\mu$m to about 18 $\mu$m.

FIG. 1A

SDI 5.0kV 8.8mm x5.00k SE(M)                              10.0μm

**Description**

**BACKGROUND**

**1. Field**

One or more embodiments of the present disclosure relate to a positive active material for a lithium secondary battery, a method of preparing the positive active material, a positive electrode for a lithium secondary battery including the positive active material, and a lithium secondary battery including the positive electrode including the positive active material.

**2. Description of the Related Art**

As portable electronic devices, communication devices, and the like are developed, there is a great need to develop a lithium secondary battery having high energy density. However, a lithium secondary battery having high energy density may have reduced safety, and thus, improvement in this regard is needed.

In order to manufacture a lithium secondary battery having a long lifespan and that produces or has less gas, a large primary particle positive active material is considered to be useful as a positive active material for a lithium secondary battery. A large primary particle positive active material has a problem in that particle aggregation occurs, and/or productivity is reduced, due to heat treatment at a high temperature for single crystallization.

In order to resolve particle aggregation of the large primary particle positive active material, when the large primary particle positive active material is used, a pulverization process is performed. However, when the pulverization process is performed, large primary particle characteristics of the positive active material may be deteriorated or reduced, and residue may be generated. Thus, there is a room for improvement in this regard.

**SUMMARY**

One or more embodiments of the present disclosure relate to a positive active material for a lithium secondary battery, wherein particle aggregation is suppressed or reduced, and a mixing ratio of cations is reduced.

One or more embodiments relate to a method of preparing the positive active material.

One or more embodiments relate to a positive electrode including the positive active material.

One or more embodiments relate to a lithium secondary battery including the positive electrode.

Additional aspects of embodiments will be set forth in part in the description which follows and, in part, will be apparent from the description, or may be learned by practice of the presented embodiments of the present disclosure.

According to one or more embodiments, a positive active material includes a nickel-based lithium metal oxide secondary particle including a plurality of large primary particles, wherein the nickel-based lithium metal oxide secondary particle has a hollow structure having a pore inside, a size of the large primary particles is in a range of about 2 micrometers ($\mu$m) to about 6 $\mu$m, and a size of the nickel-based lithium metal oxide secondary particle is in a range of about 10 $\mu$m to about 18 $\mu$m.

According to one or more embodiments, a method of preparing a positive active material for a lithium secondary battery includes obtaining a first mixture by mixing at least one selected from a nickel precursor, an M1 precursor, and an M2 precursor together with a basic solution, followed by coprecipitation of the first mixture and drying of the resultant, to thereby obtain a nickel-based metal precursor having a pore inside,

obtaining a second mixture of the nickel-based metal precursor having a pore inside and a lithium precursor;
performing primary heat treatment on the second mixture; and
performing secondary heat treatment on a product of the primary heat treatment to thereby prepare the positive active material,
wherein the primary heat treatment is performed at a temperature higher than the secondary heat treatment,
the M1 precursor includes at least one selected from a cobalt precursor, a manganese precursor, and an aluminium precursor, and
the M2 precursor includes a precursor including at least one element selected from the group consisting of boron (B), magnesium (Mg), calcium (Ca), strontium (Sr), barium (Ba), titanium (Ti), vanadium (V), chromium (Cr), iron (Fe), copper (Cu), and zirconium (Zr).

According to one or more embodiments, the positive electrode for a lithium secondary battery includes a positive electrode current collector and a positive active material layer on the positive electrode current collector, and the positive active material layer includes i) the positive active material according to one or more embodiments, and ii) at least one selected from a large particle having the same composition as the positive active material, and an agglomeration thereof.

According to one or more embodiments, a lithium secondary battery includes a positive electrode,

a negative electrode, and
an electrolyte between the positive electrode and the negative electrode.

At least some of the above and other features of the invention are set out in the claims.

**BRIEF DESCRIPTION OF THE DRAWINGS**

The above and other aspects and features of certain embodiments of the present disclosure will be more apparent from the following description taken in conjunction with the accompanying drawings, in which:

FIG. 1A is a scanning electron microscope (SEM) image of a cross-section of a positive active material prepared in Example 1;
FIG. 1B is a schematic view of a structure of a hollow positive active material having a monolayer structure according to one or more embodiments;
FIG. 1C is a schematic view of a structure of a hollow positive active material having a bilayer structure according to one or more embodiments;
FIG. 2A is an SEM image of a cross-section of a positive active material prepared in Comparative Example 2;
FIGS. 2B-2C are SEM images of surfaces of positive active materials prepared in Comparative Example 2 and Comparative Example 3, respectively;
FIG. 2D is an SEM image of a cross-section of a positive active material prepared in Comparative Example 4;
FIGS. 3A-3B are SEM images showing results of analysis of a cross-section of a nickel-based metal precursor prepared in Preparation Example 1;
FIG. 3C is an SEM image showing results of analysis of a cross-section of a nickel-based metal precursor prepared in Comparative Preparation Example 1;
FIG. 4A is an SEM image showing a condition of a positive electrode manufactured in Manufacture Example 1 before pressing;
FIG. 4B is an SEM image showing an enlarged view of a condition of the positive electrode manufactured in Manufacture Example 1 before pressing;
FIG. 4C is an SEM image showing a condition of the positive electrode manufactured in Manufacture Example 1 after pressing;
FIG. 4D is an SEM image showing an enlarged view of a condition of the positive electrode manufactured in Comparative Manufacture Example 4 after pressing; and
FIG. 5 is a schematic view of a lithium secondary battery according to one or more embodiments.

**DETAILED DESCRIPTION**

Reference will now be made in more detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of embodiments of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, a positive active material for a lithium secondary battery, a method of preparing the positive active material, a positive electrode for a lithium secondary battery, and a lithium secondary battery including the positive electrode will be described in more detail.

To manufacture a lithium secondary battery having improved lifespan characteristics, a positive electrode including a large primary particle positive active material may be used. A large primary particle positive active material may undergo a process of high-temperature heat-treatment when adding an excess of lithium during manufacturing. During the process, due to the high-temperature heat treatment, particles of the large primary particle positive active material may agglomerate, and/or productivity of the large primary particle positive active material may be reduced, and residual lithium of the large primary particle positive active material may increase. In addition, when a lithium secondary battery is manufactured using such a large primary particle positive active material, the capacity and charging and discharging efficiency of the lithium secondary battery may be deteriorated or reduced.

Because particle agglomeration may occur when using the single crystalline positive active material as described above, the large primary particle positive active material may undergo a pulverization process when manufacturing a positive electrode to reduce the effects of the particle agglomeration. However, when the pulverization process is performed, large particle characteristics of the positive active material may be deteriorated or reduced, and a residue may be generated. Thus, there is a room for improvement in this regard.

Accordingly, in contrast to the above-described problems, embodiments of the present disclosure of a large particle positive active material may not require a pulverization process. A positive active material for a lithium secondary battery includes a nickel-based lithium metal oxide secondary particle including a plurality of large primary particles, wherein the nickel-based lithium metal oxide secondary particle has a hollow structure having a pore inside, a size of the large primary particles is in a range of about 2 micrometers ($\mu$m) to about 6 $\mu$m, and a size of the nickel-based lithium metal oxide secondary particle is in a range of about 10 $\mu$m to about 18 $\mu$m.

In the present specification, when a particle is in a spherical shape, the term "size" refers to an average particle diameter, and when a particle is in a non-spherical shape, the term "size" refers to a length of a long axis of the particle (e.g., an average length of the long axis of the particle). The size of a particle may be measured by using a scanning electron microscope (SEM) and/or a particle size analyzer. An example of the particle size analyzer may be a HORIBA, LA-950 laser particle size analyzer. When the size of a particle is measured by using a particle size analyzer, the term "average particle diameter" refers to D50. The term "D50," as used herein, refers to an average particle diameter corresponding to 50% by volume in an accumulated particle size distribution curve, when the total number of particles is 100% in the accumulated particle size distribution curve in which particles are sequentially accumulated in the order of a particle having the smallest size to a particle having the largest size.

In the positive active material according to one or more embodiments, a secondary particle may include two or less (e.g. one or two) large primary particle layers.

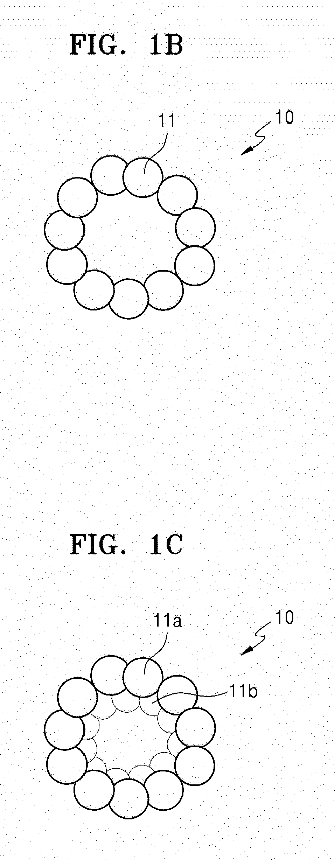

The positive active material 10 according to one or more embodiments includes a secondary particle, and as shown in FIG. 1B, the positive active material 10 may include a hollow large primary particle layer having a monolayer structure. The hollow large primary particle layer may include a primary particle 11.

The positive active material 10 according to one or more embodiments may include a hollow layer having a bilayer structure as shown in FIG. 1C. As the positive active material 10 has such a structure, the positive active material 10 may be easily broken upon a pressing process. Reference numerals 11a and 11b in FIG. 1C each refer to a first primary particle and a second primary particle, respectively, and the first primary particle 11a and the second primary particle 11b each form a first primary particle layer and a second primary particle layer.

As the positive active material according to one or more embodiments may have a cluster structure that may be readily broken, a positive electrode may be manufactured without a pulverization process. When such a positive active material is used, without a pulverization process, a conductive agent and a binder may be continuously (e.g., substantially continuously) coated on a positive electrode plate.

The positive active material according to one or more embodiments may include a plurality of the large primary particles obtained by partially breaking the positive active material during a pressing process and secondary particles, which are aggregates of the large primary particles.

The size of the primary particle in the positive active material according to one or more embodiments is in a range of about 2 $\mu$m to about 6 $\mu$m, for example, in a range of about 2 $\mu$m to about 4 $\mu$m or about 2 $\mu$m to about 3.5 $\mu$m, and the size of the nickel-based lithium metal oxide secondary particle is in a range of about 10 $\mu$m to about 18 $\mu$m, for example, in a range of about 12 $\mu$m to about 18 $\mu$m or about 12 $\mu$m to about 14 $\mu$m. A size of the pore inside the positive active material may be in a range of about 2 $\mu$m to about 7 $\mu$m, about 2 $\mu$m to about 5 $\mu$m, or about 2.5 $\mu$m to about 4 $\mu$m. When the size of the primary particle, the size of the secondary particle, and the size of the pore in the positive active material is within any of these ranges, the positive active material may have excellent capacity characteristics. The size of the pore in the present specification may be measured by SEM and/or by Brunauer-Emmett-Teller (BET) method.

The term "inside the positive active material," as used herein, refers to an area of 50 vol% to 70 vol%, e.g., 60 vol%, of the total volume from the center to a surface of the positive active material, or an area excluding an (external) area within 3 $\mu$m from the outermost surface of the positive active material, of the total distance from the center to a surface of the positive active material.

The nickel-based lithium metal oxide may include a compound represented by Formula 1:

$$\text{Formula 1} \qquad \text{Li}_a(\text{Ni}_{1-x-y}\text{M1}_x\text{M2}_y)\text{O}_{2\pm\alpha1}$$

wherein, in Formula 1, M1 may include at least one element selected from cobalt (Co), manganese (Mn), and aluminium (Al),

M2 may include at least one element selected from the group consisting of boron (B), magnesium (Mg), calcium (Ca), strontium (Sr), barium (Ba), titanium (Ti), vanadium (V), chromium (Cr), iron (Fe), copper (Cu), and zirconium (Zr), and

$0.95 \leq a \leq 1.1$, $0.6 \leq (1-x-y) < 1$, $0 \leq x < 0.4$, $0 \leq y < 0.4$, and $0 \leq \alpha 1 \leq 0.1$, excluding a case where x and y are both 0.

The nickel-based lithium metal oxide may include, for example, a compound represented by Formula 2:

$$\text{Formula 2} \qquad \text{Li}_a(\text{Ni}_{1-x-y-z}\text{Co}_x\text{M3}_y\text{M4}_z)\text{O}_{2 \pm \alpha 1}$$

wherein, in Formula 2, M3 may include at least one element selected from Mn and Al,
M4 may include at least one element selected from the group consisting of B, Mg, Ca, Sr, Ba, Ti, V, Cr, Fe, Cu, and Zr, and
$0.95 \leq a \leq 1.1$, $0.6 \leq (1-x-y-z) < 1$, $0 \leq x < 0.4$, $0 \leq y < 0.4$, $0 \leq z < 0.4$, and $0 \leq \alpha 1 \leq 0.1$, excluding a case where x, y, and z are all 0.

In Formula 2, a nickel content may be, for example, in a range of about 60 mol% to about 95 mol%, or about 60 mol% to about 85 mol% (based on the total amount of metals other than lithium).
A peak intensity ratio $I_{(003)}/I_{(104)}$ of the positive active material for a lithium secondary battery measured by X-ray diffraction analysis may be in a range of about 1.2 to about 4.0, about 1.2 to about 2.0, about 1.6 to about 2.0, about 1.6 to about 1.95, about 1.6 to about 1.9, about 1.6 to about 1.8, about 1.6 to about 1.75, or about 1.67 to about 1.75. A peak intensity ratio $I_{(003)}/I_{(104)}$ of a positive electrode plate including the positive active material measured by X-ray diffraction analysis may be in a range of about 1.2 to about 4.0, about 1.2 to about 2.0, about 1.5 to about 1.8, or about 1.67 to about 1.79, and an area ratio $A_{(003)}/A_{(104)}$ may be in a range of about 1.1 to about 1.4, about 1.1 to about 1.35, or about 1.25 to about 1.35.
In X-ray diffraction analysis, a peak intensity $I_{(003)}$ and a peak intensity $I_{(104)}$ refer to a peak intensity of a (003) plane and a peak intensity of a (104) plane, respectively. In addition, the peak intensity ratio $I_{(003)}/I_{(104)}$ is a ratio of a peak intensity of the (003) plane to a peak intensity of the (104) plane and is a parameter for evaluating a degree of uniformity of orientation of crystal grains. A degree of cation mixing or cation exchange of the positive active material may be evaluated by the peak intensity ratio $I_{(003)}/I_{(104)}$.
The (104) plane represents a plane perpendicular (e.g., substantially perpendicular) to a plane of lithium-ion movement path, and the peak intensity of the (104) plane may decrease as the degree of orientation of a crystal plane of a layered structure increases. Accordingly, as the degree of orientation increases, the peak intensity of the (104) plane decreases, and the peak intensity ratio $I_{(003)}/I_{(104)}$ increases. When the peak intensity ratio $I_{(003)}/I_{(104)}$ increases, a stable positive active material structure may be formed.
The $\text{FWHM}_{(003)}$ of the positive active material according to an embodiment may be in a range of about 0.079° to about 0.082°, e.g., 0.081°, and $\text{FWHM}_{(003)}/\text{FWHM}_{(104)}$ obtained by X-ray diffraction analysis on the positive active material may be in a range of about 0.80 to about 0.87 or about 0.80 to about 0.85. Thus, the positive active material may be identified as a crystal. As used herein, $\text{FWHM}_{(003)}$ represents a full width at half maximum (FWHM) of a peak corresponding to the (003) plane, and $\text{FWHM}_{(104)}$ represents a FWHM of a peak corresponding to the (104) plane.
In addition, it may be seen that the positive active material according to an embodiment is a crystal by testing grains and grain boundaries larger than a sub-micro scale when the cross-sectional microstructure is observed through SEM.
When the peak intensity $I_{(003)}/I_{(104)}$, the $\text{FWHM}_{(003)}/\text{FWHM}_{(104)}$, and the $A_{(003)}/A_{(104)}$ of the positive active material according to an embodiment and the positive electrode plate including the positive active material are within these ranges, the stability of the crystal structure of the positive active material may be improved, and the expansion and contraction rate according to intercalating/deintercalating of lithium may be improved. Thus, the capacity characteristics of the lithium secondary battery may be improved.
Hereinafter, a method of preparing the positive active material according to an embodiment will be described in more detail.
At least one metal precursor of a nickel precursor, an M1 precursor, and an M2 precursor is mixed together with a basic solution to obtain a first mixture. Then, the first mixture is subjected to coprecipitation and drying to thereby obtain a nickel-based metal precursor having a pore inside. The nickel-based metal precursor may be amorphous (or substantially amorphous), and the nickel-based metal precursor may be a secondary particle, and the size of the secondary particle may be in a range of about 10 μm to about 18 μm.
The M1 precursor includes an element identical to M1 of Formula 1, and the M1 precursor includes at least one selected from a cobalt precursor, a manganese precursor, and an aluminium precursor. The M2 precursor includes an element identical to M2 of Formula 2, and the M2 precursor may include a precursor including at least one element selected from the group consisting of boron (B), magnesium (Mg), calcium (Ca), strontium (Sr), barium (Ba), titanium (Ti), vanadium (V), chromium (Cr), iron (Fe), copper (Cu), and zirconium (Zr):

<div align="center">

Formula 1       $Li_a(Ni_{1-x-y}M1_xM2_y)O_{2\pm\alpha1}$

</div>

wherein, in Formula 1, M1 may include at least one element selected from cobalt (Co), manganese (Mn), and aluminium (Al),

M2 may include at least one element selected from the group consisting of boron (B), magnesium (Mg), calcium (Ca), strontium (Sr), barium (Ba), titanium (Ti), vanadium (V), chromium (Cr), iron (Fe), copper (Cu), and zirconium (Zr), and

$0.95 \leq a \leq 1.1$, $0.6 \leq (1-x-y) < 1$, $0 \leq x < 0.4$, $0 \leq y < 0.4$, and $0 \leq \alpha1 \leq 0.1$, excluding a case where x and y are both 0.

The metal precursor may include, for example, at least one selected from a nickel precursor, a cobalt precursor, a manganese precursor, and a metal (M2) precursor.

During the coprecipitation, the first mixture may be stirred in a pH range of about 11 to about 12 for about 8 to about 12 hours or about 9 to about 10 hours. Then the pH of the first mixture may be adjusted to about 10.8 to about 11.9 to lower the pH by about 0.1 to about 0.3 or about 0.1 to about 0.2 based on the initial pH. Thus, the coprecipitation rate may be changed, and a difference in the synthesis rate between the inside and outside of the nickel-based metal precursor may occur. The mixture may be stirred for after the pH has been adjusted for example, about 8 to about 12 hours.

As a result, a nickel-based metal precursor having a pore inside may be prepared. As described herein, the term "nickel-based metal precursor" refers to a precursor for obtaining a nickel-based lithium metal oxide.

The coprecipitation described above may proceed at a faster rate, as compared with a general production method of a positive active material precursor, and thus, pore dispersion of the core to be controlled to be high, such that the positive active material may be easily manufactured without performing a separate pulverization process for the positive active material. Thus, productivity of the positive active material may be improved. When the pore dispersion is controlled to be high, the number of pores in the positive active material after heat treatment will be increased such that the positive active material may be easily broken during pressing, thereby obtaining excellent electrochemical properties in the positive electrode. Here, coprecipitation at a high speed is possible by adjusting a stirring time to be short while proceeding at a faster stirring speed.

The nickel-based metal precursor having a pore inside may include a secondary particle containing a plurality of primary particles, like the positive active material, and may have a hollow structure with pores thereinside. The size of the secondary particle may be, for example, in a range of about 12 $\mu$m to about 18 $\mu$m or about 12 $\mu$m to about 14 $\mu$m.

The size of each of the primary particles may be in a range of about 0.2 $\mu$m to about 0.3 $\mu$m (about 200 nm to about 300 nm). When the size of each of the primary particles and the secondary particle of the nickel-based metal precursor having a pore inside is within any of these ranges, the phase stability may be excellent. Thus, a positive active material having improved capacity characteristics may be obtained.

The nickel-based metal precursor having a pore inside may have amorphous characteristics and may include an internal portion where the pore exists and an external portion having a dense structure, as compared with the internal portion. Amorphous characteristics of the nickel-based metal precursor may be identified by X-ray diffraction analysis.

The term "inside the nickel-based metal precursor," as used herein, refers to a pore area having many pores and an area of 50 vol% to 70 vol%, e.g., 60 vol%, of the total volume from the center to a surface of the nickel-based metal precursor, or an area excluding an (external) area within 3 $\mu$m from the outermost surface of the nickel-based metal precursor, of the total distance from the center to a surface of the nickel-based metal precursor.

In some embodiments, the inside of the nickel-based metal precursor may have a pore area having pores, and a length of the major axis of the pore area may be, for example, in a range of about 2 $\mu$m to about 7 $\mu$m, or for example, about 3.5 $\mu$m to about 5 $\mu$m.

The first mixture may include a complexing agent, a pH adjusting agent, and/or the like.

The pH adjusting agent may lower the solubility of metal ions inside a reactor such that metal ions may be precipitated as hydroxide. For example, the pH adjusting agent may include ammonium hydroxide, sodium hydroxide (NaOH), sodium carbonate ($Na_2CO_3$), and/or the like. For example, the pH adjusting agent may include sodium hydroxide (NaOH).

The complexing agent may control a formation rate of precipitates in coprecipitation. The complexing agent may include ammonium hydroxide ($NH_4OH$) (ammonia water), citric acid, citrate, acrylic acid, tartaric acid, glycolic acid, or a combination thereof. The complexing agent may be included in any suitable amount generally used in the art for complexing agents. The complexing agent may include, for example, ammonia water.

After washing a product obtained according to the coprecipitation, the product may be dried to obtain the desired nickel-based metal precursor. Here, drying may be carried out under general conditions.

At least one metal precursor selected from the nickel precursor, the M1 precursor, and the M2 precursor may include, for example, a nickel precursor, a manganese precursor, and a cobalt precursor. In some embodiments, the metal precursor may include, for example, a nickel precursor, a cobalt precursor, and an aluminium precursor.

Examples of the nickel precursor may include $Ni(OH)_2$, $NiO$, $NiOOH$, $NiCO_3 \cdot 2Ni(OH)_2 \cdot 4H_2O$, $NiC_2O_4 \cdot 2H_2O$, $Ni(NO_3)_2 \cdot 8H_2O$, $NiSO_4$, $NiSO_4 \cdot 8H_2O$, fatty acid nickel salt, nickel halide, or a combination thereof. Examples of the manganese precursor may include a manganese oxide such as $Mn_2O_3$, $MnO_2$, and/or $Mn_3O_4$, a manganese salt such as $MnCO_3$, $Mn(NO_3)_2$, $MnSO_4$, a manganese acetate, a dicarboxylic acid manganese salt, manganese citrate, and/or a fatty acid manganese salt, oxyhydroxide and/or a halide such as manganese chloride, or a combination thereof.

Examples of the cobalt precursor may include $Co(OH)_2$, $CoOOH$, $CoO$, $Co_2O_3$, $Co_3O_4$, $Co(OCOCH_3)_2 \cdot 4H_2O$, $COCl_2$, $Co(NO_3)_2 \cdot 6H_2O$, $CoSO_4$, $Co(SO_4)_2 \cdot 7H_2O$, or a combination thereof.

Examples of the aluminium precursor may include aluminium hydroxide, aluminium chloride, aluminium oxide, or a combination thereof.

A precursor containing each element in the M2 precursor may include a salt, hydroxide, oxyhydride, halide, or a combination thereof, containing each element. A salt containing the above-mentioned element may include, for example, at least one selected from sulfate, alkoxide, oxalate, phosphate, halide, oxyhalide, sulfide, oxide, peroxide, acetate, nitrate, carbonate, citrate, phthalate, and perchloride.

A content of the at least one metal precursor selected from the nickel precursor, the M1 precursor and the M2 precursor may be stoichiometrically controlled to obtain the desired nickel-based metal precursor.

The nickel-based metal precursor may include a compound represented by Formula 3,

a compound represented by Formula 4, or a combination thereof:

$$\text{Formula 3} \qquad (Ni_{1-x-y}M_xM2_y)(OH)_2$$

wherein, in Formula 3, M1 may include at least one element selected from cobalt (Co), manganese (Mn), and aluminium (Al),

M2 may include at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), and

$0.6 \leq (1-x-y) < 1$, $0 \leq x < 0.4$, $0 \leq y < 0.4$, excluding a case where x and y are both 0, and

$$\text{Formula 4} \qquad (Ni_{1-x-y}M_xM2_y)O$$

wherein, in Formula 4, M1 may include at least one element selected from cobalt (Co), manganese (Mn), and aluminium (Al),

M2 may include at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), and

$0.6 \leq (1-x-y) < 1$, $0 \leq x < 0.4$, and $0 \leq y < 0.4$, excluding a case where x and y are both 0.

The nickel-based metal precursor may include, for example, a compound represented by Formula 5, a compound represented by Formula 6, or a combination thereof:

$$\text{Formula 5} \qquad Ni_{1-x-y-z}Co_xM3_yM4_z(OH)_2$$

wherein, in Formula 5, M3 may include at least one element selected from Mn and Al,

M4 may include at least one element selected from the group consisting of B, Mg, Ca, Sr, Ba, Ti, V, Cr, Fe, Cu, Zr, and Al, and

$0.6 \leq (1-x-y-z) < 1$, $0 \leq x < 0.4$, $0 \leq y < 0.4$, and $0 \leq z < 0.4$, excluding a case where x, y, and z are all 0, and

$$\text{Formula 6} \qquad (Ni_{1-x-y-z}Co_xM3_yM4_z)O$$

wherein, in Formula 6, M3 may include at least one element selected from Mn and Al,

M4 may include at least one element selected from the group consisting of B, Mg, Ca, Sr, Ba, Ti, V, Cr, Fe, Cu, and Zr, and

$0.6 \leq (1-x-y-z) < 1$, $0 \leq x < 0.4$, $0 \leq y < 0.4$, and $0 \leq z < 0.4$, excluding a case where x, y, and z are all 0.

The nickel-based metal precursor may include, for example, a compound represented by Formula 7, a compound represented by Formula 8,

or a combination thereof:

$$\text{Formula 7} \qquad Ni_{1-x-y-z}Co_xMn_yM4_z(OH)_2$$

wherein, in Formula 7, M4 may include at least one element selected from the group consisting of B, Mg, Ca, Sr, Ba, Ti, V, Cr, Fe, Cu, Zr, and Al, and
$0.6 \leq (1-x-y-z) < 1$, $0 \leq x < 0.4$, $0 \leq y < 0.4$, and $0 \leq z < 0.4$, excluding a case where x, y, and z are all 0, and

$$\text{Formula 8} \qquad (Ni_{1-x-y-z}Co_xAl_yM4_z)O$$

wherein, in Formula 8, M4 may include at least one element selected from the group consisting of B, Mg, Ca, Sr, Ba, Ti, V, Cr, Fe, Cu, and Zr, and
$0.6 \leq (1-x-y-z) < 1$, $0 \leq x < 0.4$, $0 \leq y < 0.4$, $0 \leq z < 0.4$, excluding a case where x, y, and z are all 0.

Next, the nickel-based metal precursor having a pore inside and a lithium precursor are mixed together to obtain a second mixture.

A mixing ratio of the lithium precursor and the nickel-based metal precursor may be stoichiometrically controlled to produce the desired positive active material.

Primary heat treatment is performed on the second mixture. Phase change and grain growth may proceed through the primary heat treatment.

The primary heat-treated product may not be subject to a pulverization process, and the secondary heat treatment is treated thereto to prepare the positive active material. The primary heat treatment is performed at a temperature higher than the secondary heat treatment. When the primary heat treatment is performed at a lower temperature than the secondary heat treatment, it is difficult to obtain a large particle having excellent phase stability.

The term "pulverization," as used herein, refers a process performed by using equipment such as a jet mill that applies a strong force (pneumatic pressure and/or mechanical pressure) to remove strong agglomeration between primary particles of the secondary particle.

The nickel-based metal precursor and the lithium precursor may be mixed together such that a molar ratio (Li/Me) of Li to metals other than Li may be about 0.9 or more and less than about 1.1, more than about 1.0 and less than about 1.1, and about 1.01 to about 1.06, or about 1.02 to about 1.04.

The lithium precursor may include lithium hydroxide, lithium carbonate, lithium sulfate, lithium nitrate, or a combination thereof.

The primary heat treatment may be performed in an oxidizing gas atmosphere and at a temperature in a range of about 800 °C to about 1,200 °C, about 900 °C to about 1,100 °C, or about 900° C to about 1,200 °C, and the secondary heat treatment may be performed in an oxidizing gas atmosphere and at a temperature in a range of about 600 °C to about 900 °C, about 650 °C to about 850 °C, about 650 °C to about 800 °C, or about 650 °C to about 750 °C. Phase change and grain growth may proceed during the primary heat treatment. Crystallinity may be established during the secondary heat treatment. When the primary heat treatment and the secondary heat treatment are performed under the above conditions, a lithium secondary battery having a high density and long lifespan may be manufactured.

The time of the primary heat treatment may vary depending on a temperature of the primary heat treatment, and the time of the primary heat treatment may be, for example, about 8 hours to about 20 hours.

The oxidative gas atmosphere may use an oxidative gas such as oxygen and/or air. For example, the oxidative gas may be constituted of 10 volume% (vol%) to 20 volume% of oxygen and/or air and 80 vol% to 90 vol% of an inert gas.

A disintegration process may be further performed between the primary heat treatment and the secondary heat treatment. The disintegration process may be carried out through dispersion in a suitable or appropriate size using a rotary impact mill equipped with a classifier such as a screen, a cutter mill, a ball mill, and/or a beads mill.

The term "disintegration," as used herein, is performed, in general, by using equipment such as a cutter mill, a roll crusher, and/or a ball mill to remove weak agglomeration between secondary particles. The term "disintegration," as used herein, refers to dispersing and micronizing agglomerated materials with a relatively weak force, such as particle aggregates and/or granules.

According to an embodiment, the disintegration may be performed by using a roll crusher at a rate in a range of about 100 revolutions per minute (rpm) to about 300 rpm, about 100 rpm to about 250 rpm, or about 120 rpm to about 275 rpm. Spacing of the roll crusher may be in a range of about 1 mm to about 3 mm, about 1.2 mm to about 2.8 mm, or about 1.5 mm. Stirring time for disintegration may vary depending on disintegration conditions, but the stirring may be performed for about 10 seconds to about 60 seconds in general.

The mixing together of the nickel-based metal precursor and the lithium precursor may be dry-mixing and performed using a mixer and/or the like. The dry mixing may be performed by using a milling method. Milling conditions are not particularly limited; however, the milling may be performed such that a precursor used as a starting material may not undergo deformation such as micronization.

The size of the lithium precursor mixed together with the nickel-based metal precursor may be controlled in advance. A size (average particle diameter) of the lithium precursor may be in a range of about 5 $\mu$m to about 15 $\mu$m, for example, about 10 $\mu$m. A lithium precursor having such a size and the nickel-based metal precursor may be milled at a rate in a range of 300 revolutions per minute (rpm) to 3,000 rpm to obtain the desired second mixture. In the milling process, when a temperature inside the mixer is 30 °C or higher, a cooling process may be performed thereon such that the temperature inside the mixer is at room temperature (25 °C).

The nickel-based metal precursor may include, for example, $Ni_{0.92}Co_{0.06}Mn_{0.02}(OH)_2$, $Ni_{0.92}CO_{0.05}Al_{0.03}(OH)_2$, $Ni_{0.94}Co_{0.03}Al_{0.03}(OH)_2$, $Ni_{0.88}Co_{0.06}Al_{0.06}(OH)_2$, $Ni_{0.96}Co_{0.02}Al_{0.02}(OH)_2$, $Ni_{0.93}Co_{0.04}Al_{0.03}(OH)_2$, $Ni_{0.8}CO_{0.15}Al_{0.05}O_2(OH)_2$, $Ni_{0.75}CO_{0.20}Al_{0.05}(OH)_2$, $Ni_{0.92}Co_{0.08}Mn_{0.03}(OH)_2$, $Ni_{0.94}Co_{0.03}Mn_{0.03}(OH)_2$, $Ni_{0.88}Co_{0.06}Mn_{0.06}(OH)_2$, $Ni_{0.96}Co_{0.02}Mn_{0.02}(OH)_2$, $Ni_{0.93}Co_{0.04}Mn_{0.03}(OH)_2$, $Ni_{0.8}Co_{0.15}Mn_{0.05}(OH)_2$, $Ni_{0.75}Co_{0.20}Mn_{0.05}(OH)_2$, $Ni_{0.6}Co_{0.2}Mn_{0.2}(OH)_2$, $Ni_{0.7}Co_{0.15}Mn_{0.15}(OH)_2$, $Ni_{0.7}Co_{0.1}Mn_{0.2}(OH)_2$, $Ni_{0.8}Co_{0.1}Mn_{0.1}(OH)_2$, and/or $Ni_{0.85}Co_{0.1}Al_{0.05}(OH)_2$.

The nickel-based lithium metal oxide may include, for example, $LiNi_{0.92}Co_{0.06}Mn_{0.02}O_2$, $Li_{1.05}Ni_{0.92}Co_{0.05}Al_{0.03}O_2$, $Li_{1.05}Ni_{0.94}CO_{0.03}Al_{0.03}O_2$, $Li_{1.05}Ni_{0.88}Co_{0.06}Al_{0.06}O_2$, $Li_{1.05}Ni_{0.96}Co_{0.02}Al_{0.02}O_2$, $Li_{1.05}Ni_{0.93}Co_{0.04}Al_{0.03}O_2$, $Li_{1.05}Ni_{0.8}Co_{0.15}Al_{0.05}O_2$, $Li_{1.05}Ni_{0.75}Co_{0.20}Al_{0.05}O_2$, $Li_{1.05}Ni_{0.92}Co_{0.05}Mn_{0.03}O_2$, $Li_{1.05}Ni_{0.94}Co_{0.03}Mn_{0.03}O_2$, $Li_{1.05}Ni_{0.88}Co_{0.06}Mn_{0.06}O_2$, $Li_{1.05}Ni_{0.96}Co_{0.02}Mn_{0.02}O_2$, $Li_{1.05}Ni_{0.93}Co_{0.04}Mn_{0.03}O_2$, $Li_{1.05}Ni_{0.8}Co_{0.15}Mn_{0.05}O_2$, $Li_{1.05}Ni_{0.75}Co_{0.20}Mn_{0.05}O_2$, $Li_{1.05}Ni_{0.6}Co_{0.2}Mn_{0.2}O_2$, $Li_{1.05}Ni_{0.7}Co_{0.15}Mn_{0.15}O_2$, $Li_{1.05}Ni_{0.7}Co_{0.1}Mn_{0.2}O_2$, $Li_{1.05}Ni_{0.8}Co_{0.1}Mn_{0.1}O_2$, and/or $Li_{1.05}Ni_{0.85}Co_{0.1}Al_{0.05}O_2$.

According to another aspect of an embodiment, a positive electrode for a lithium secondary battery including a positive electrode current collector and at least one selected from the positive active material, a large particle having the same composition as the positive active material, and an agglomeration thereof. For example, the positive active material layer may include i) the positive active material according to another aspect of an embodiment, and ii) at least one selected from a large particle having the same composition as the positive active material, and an agglomeration thereof.

The positive electrode according to an embodiment may include, for example, the positive active material and a large particle having the same composition as the positive active material. The large particle is called a large crystal particle, and it has a size of about 2 $\mu$m to about 6 $\mu$m.

The term "large particle," as used herein, refers to a monolithic structure in which particles are present as independent phases in which particles do not have the morphology of being aggregated with each other. For example, the large particle may be a crystal particle that may exist alone without a grain boundary within the particle and include (e.g., consist of) one particle (e.g., a single or sole particle). The large particle may be a single crystal or a polycrystalline particle including several crystals. For example, the large particle may be a monolithic particle. Also, large particles are also called large crystal particles.

A large particle may not be a nickel-based lithium metal oxide secondary particle which is a starting material used in manufacturing a positive active material layer, and the large particle may represent a product obtained by partially crushing and/or breaking the nickel-based lithium metal oxide secondary particle, while pressing a positive electrode.

The positive active material of the positive electrode according to an embodiment may contain a pore having a size in a range of about 0.5 $\mu$m to about 5 $\mu$m, about 0.5 $\mu$m to about 4 $\mu$m, or about 0.5 $\mu$m to about 2 $\mu$m. The size of the pore may be identified through SEM analysis.

After the positive electrode is pressed, the positive active material may be disintegrated such that aggregated primary particles may be dispersed to manufacture a one body positive electrode plate. The pore may be, for example, a closed pore. After pressing, the density of the positive electrode may be greater than 3.3 grams per cubic centimeter (g/cc).

The positive electrode according to one or more embodiments may include a positive active material layer having a structure in which particles may be broken due to stronger pressure on a surface portion than on a center portion adjacent to a positive electrode current collector. The positive active material layer may have such a structure due to the stronger pressure on a surface portion than on a center portion adjacent to a positive electrode current collector. The structure of the positive active material layer may be evaluated based on an area of an image such as SEM.

The size of the positive active material in the center portion may be in a range of about 1 $\mu$m to about 7 $\mu$m, and the size of the positive active material in the surface portion may be in a range of about 1 $\mu$m to about 5 $\mu$m.

The positive electrode according to one or more embodiments may include a positive active material layer that may include a greater amount of the positive active material, which may have a hollow structure, in a center portion adjacent to a positive electrode current collector than in a surface portion. For example, the positive electrode includes the positive active material having a hollow structure in the center portion adjacent to the positive electrode current collector and in the surface portion, and the positive active material having a hollow structure is present in the center portion in an amount greater than that of the surface portion. In one or more embodiments, the positive electrode includes the large particle in the surface portion and the center portion adjacent to the positive electrode current collector, and the large particle is present in the surface portion in an amount greater than that of the center portion. The structure of the positive active material layer may be evaluated based on an area of an image such as SEM. After pressing the positive electrode, the size of the pore of the positive active material may be different from the size of the pore of the positive active material before the pressing of the positive electrode.

The positive electrode according to one or more embodiments may contain, for example, 2 or fewer of the positive active material layers. The structure of the positive active material layer may be identified by using SEM and/or a transmission electron microscope (TEM).

The term "surface portion," as used herein, refers to an area of a positive active material layer farther (or farthest) from a positive electrode current collector (substrate). The surface portion may be an area of about 30 length% to about 50 length% from an outermost surface of the positive active material layer, for example, an area of 40 length% or an area (based on the positive active material layer having a total thickness of 40 $\mu$m) within 20 $\mu$m (based on an electrode plate of 40 $\mu$m) from the outermost surface of the positive active material layer.

The term "center portion," as used herein, refers to an area of a positive active material layer adjacent to a positive electrode current collector (substrate). The center portion may be an area of about 50 length% to about 70 length% of the total length from the positive electrode current collector to an outermost surface of the positive active material layer, for example, an area of 60 length% or an area except the other area within 20 $\mu$m from the outermost surface of the positive active material layer.

According to one or more embodiments, the hollow particles are easily broken into single particles without a pulverization process, and have a structure to increase the mixture density.

According to one or more embodiments, a lithium secondary battery includes the positive electrode, a negative electrode, and an electrolyte therebetween.

When a method of preparing a positive active material according to an embodiment is used, aggregation between particles may be suppressed or reduced, productivity may be improved, and a one body positive active material may be manufactured without a pulverization process. When the positive active material is used, a lithium secondary battery having improved high density and improved lifespan may be manufactured.

Hereinafter, a method of preparing a lithium secondary battery, having a positive electrode including the positive active material according to one or more embodiments; a negative electrode; a non-aqueous electrolyte containing a lithium salt; and a separator, will be described in more detail.

The positive electrode and the negative electrode may each be prepared by preparing a positive active material layer and a negative active material layer by coating and drying a composition for forming a positive active material layer and a composition for forming a negative active material layer on each current collector, respectively.

The composition for forming a positive active material may be prepared by mixing together a positive active material, a conductive agent, a binder, and a solvent. The nickel-based active material may be used as the positive active material.

The binder included in the positive electrode may improve binding force between positive active material particles and the positive active material and the positive electrode current collector. Examples thereof may include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene polymer (EPDM), sulfonated-EPDM, styrene butadiene rubber (SBR), fluorine rubber, and/or various suitable copolymers thereof. One of the examples or a mixture of two or greater of the examples may be used as the binder. An amount of the binder may be in a range of about 1 part to about 5 parts by weight based on 100 parts by weight of the positive active material. When a content (e.g., amount) of the binder is within the foregoing range, the binding force of an active material layer to a current collector may be suitable or satisfactory.

The conductive agent may include any suitable material having suitable electrical conductivity without causing an undesirable chemical change in a battery. Examples of the conductive agent include graphite, such as natural graphite and/or artificial graphite; a carbonaceous material, such as carbon black, acetylene black, Ketjen black, channel black, furnace black, lamp black, and/or summer black; conductive fibers, such as carbon nanotubes, carbon fibers, and/or metal fibers; fluorinated carbon; metal powder of aluminium and/or nickel; conductive whisker, such as zinc oxide and/or potassium titanate; a conductive metal oxide, such as titanium oxide; and a conductive material, such as a polyphenylene derivative.

The content of the conductive agent may be in a range of about 1 part to about 10 parts by weight or about 1 part to about 5 parts by weight, based on 100 parts by weight of the positive active material. When an amount of the conductive agent is within this range, conductivity characteristics (e.g., electrical conductivity characteristics) finally obtained may be excellent.

Examples of the solvent include N-methyl pyrrolidone. An amount of the solvent may be in a range of about 20 parts to about 100 parts by weight based on 200 parts by weight of the positive active material. When the amount of the solvent is within this range, a process for forming the positive active material layer may be performed efficiently.

The positive electrode current collector is not particularly limited and may be any suitable material as long as the positive electrode current collector has a thickness in a range of 3 $\mu$m to 500 $\mu$m and suitable electrical conductivity without causing undesirable chemical change in a battery. Examples of the positive electrode current collector include stainless steel, aluminium, nickel, titanium, and sintered carbon; and aluminium and/or stainless steel, the aluminium and the stainless steel each being surface-treated with carbon, nickel, titanium, and/or silver. The positive electrode current collector may be processed to have fine bumps on surfaces thereof to enhance a binding force of the positive active material to the current collector. The positive electrode current collector may be used in any of various suitable forms including a film, a sheet, a foil, a net, a porous structure, a foam, and a non-woven fabric.

Separately, a negative active material, a binder, and a solvent may be mixed together to prepare a composition for forming a negative active material layer.

As the negative active material, a material capable of reversibly intercalating/deintercalating lithium ions, lithium metal, an alloy of lithium metal, a material capable of doping and dedoping lithium, a transition metal oxide, or a combination thereof may be used.

As the material capable of reversibly intercalating/deintercalating lithium ions, for example, a carbon material such as a carbonaceous negative active material generally used in a lithium secondary battery may be used. Examples of the carbonaceous negative active material may include crystalline carbon, amorphous carbon, and a combination thereof. Examples of the crystalline carbon include shapeless, disk-shaped, flake, globular, and/or fibrous natural graphite and artificial graphite. Examples of the amorphous carbon include soft carbon, hard carbon, meso-phase pitch carbides, and calcined cokes.

The lithium metal alloy may include an alloy of lithium with a metal selected from sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

Examples of the material capable of doping and dedoping lithium include a silicon-based material, e.g., Si, $SiO_x$ (0<x<2), Si-Q alloy (wherein Q may be selected from the group consisting of an alkali metal, an alkaline earth metal, a Group 13 element, a Group 14 element, a Group 15 element, a Group 16 element, a transition metal, a rare earth element, and a combination thereof, and Q is not Si), a Si-carbon complex, Sn, $SnO_2$, Sn-R (wherein R may be selected from the group consisting of an alkali metal, an alkaline earth metal, a Group 13 element, a Group 14 element, a Group 15 element, a Group 16 element, a transition metal, a rare earth element, and a combination thereof, and R is not Sn), a Sn-carbon complex, and a mixture of at least one of the examples with $SiO_2$. Q and R may be selected from the group consisting of magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminium (Al), gallium (Ga), tin (Sn), indium (In), germanium (Ge), phosphorus (P), arsenic (As), antimony (Sb), bismuth (Bi), sulfur (S), selenium (Se), tellurium (Te), polonium (Po), and a combination thereof.

The transition metal oxide may include lithium titanium oxide.

Examples of the binder for a negative electrode include a binder polymer such as polyvinylidene fluoride-hexafluoropropylene copolymer (PVDF-co-HFP), polyvinylidene fluoride, polyacrylonitrile, polymethyl methacrylate, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, polyacrylic acid, ethylene-propylene-diene monomer (EPDM), sulfonated-EPDM, styrene butadiene rubber (SBR), fluorine rubber, polyacrylic acid, and a polymer thereof in which hydrogen is substituted with Li, Na, and/or Ca, and/or various suitable copolymers.

The negative active material layer may further include a thickener.

The thickener may include at least one selected from carboxymethyl cellulose (CMC), carboxyethyl cellulose, starch, regenerated cellulose, ethyl cellulose, hydroxymethyl cellulose, hydroxyethyl cellulose, hydroxypropyl cellulose, and polyvinyl alcohol. For example, the thickener may include CMC.

An amount of the solvent may be in a range of about 100 parts to about 300 parts by weight based on 100 parts by weight of the negative active material. When the amount of the solvent is within this range, a process for forming the negative active material layer may be performed efficiently.

When the negative active material layer has electrical conductivity, a conductive agent is not needed. However, according to a need, the negative active material layer may further include a conductive agent.

The conductive agent may include any suitable material having suitable electrical conductivity without causing an undesirable chemical change in a battery. Examples of the conductive agent include graphite, such as natural graphite or artificial graphite; a carbonaceous material, such as carbon black, acetylene black, Ketjen black, channel black, furnace black, lamp black, and/or summer black; conductive fibers, such as carbon fibers and/or metal fibers; conductive tubes, such as carbon nanotubes; fluorocarbon; metal powder of aluminium and/or nickel; conductive whisker, such as zinc oxide or potassium titanate; a conductive metal oxide, such as titanium oxide; and a conductive material, such as a polyphenylene derivative. The conductive agent may include, for example, carbon black.

When the negative active material layer includes a conductive agent, a content of the conductive agent may be in a range of about 0.01 parts to about 10 parts by weight, about 0.01 parts to about 5 parts by weight, or about 0.1 parts to about 2 parts by weight, based on 100 parts by weight of the total weight of the negative active material layer.

The negative electrode current collector may have a thickness in a range of 3 $\mu$m to 500 $\mu$m. The negative electrode current collector is not particularly limited and may be any suitable material as long as the negative electrode current collector has suitable electrical conductivity without causing undesirable chemical change in a battery. Examples of the negative electrode current collector may include copper, stainless steel, aluminium, nickel, titanium, and sintered carbon; copper and/or stainless steel, the copper and the stainless steel each being surface-treated with carbon, nickel, titanium, and/or silver; and an aluminium-cadmium alloy. In addition, like the positive electrode current collector, the negative electrode current collector may be processed to have fine bumps on surfaces of the negative electrode current collector to enhance a binding force of the negative active material to the current collector. The negative electrode current collector may be used in any of various suitable forms including a film, a sheet, a foil, a net, a porous structure, a foam, and a non-woven fabric.

A separator may be between the positive electrode and the negative electrode, each prepared according to the foregoing process.

The separator may have a pore diameter of 0.01 $\mu$m to 10 $\mu$m and a thickness of 5 $\mu$m to 30 $\mu$m. In some embodiments, the separator may include, for example, an olefin-based polymer, such as polypropylene and/or polyethylene; and/or a sheet and/or non-woven fabric formed of glass fibers. When a solid electrolyte, such as a polymer, is used as an electrolyte, the solid electrolyte may also serve as a separator.

A non-aqueous electrolyte containing a lithium salt may be constituted of a non-aqueous organic solvent and a lithium salt. As a non-aqueous electrolyte, a non-aqueous electrolyte solution, an organic solid electrolyte, an inorganic solid electrolyte, and/or the like may be used.

Non-limiting examples of the non-aqueous electrolyte solution may include an aprotic organic solvent, such as N-methyl pyrrolidone, propylene carbonate, ethylene carbonate, butylene carbonate, dimethyl carbonate, diethyl carbonate, gamma-butyrolactone, 1,2-dimethoxy ethane, 2-methyl tetrahydrofuran, dimethyl sulfoxide, 1,3-dioxolane, N,N-formamide, N,N-dimethyl formamide, dioxolane, acetonitrile, nitromethane, methyl formate, methyl acetate, triester phosphate, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, ethyl propionate, and the like.

Non-limiting examples of the organic solid electrolyte may include a polyethylene derivative, a polyethylene oxide derivative, a polypropylene oxide derivative, a phosphoric ester polymer, a polyester sulfide, a polyvinyl alcohol, a polyvinylidene difluoride, and the like.

Examples of the inorganic solid electrolyte may include a lithium nitride, such as $Li_3N$, $LiI$, $Li_5NI_2$, $Li_3N$-$LiI$-$LiOH$, $LiSiO_4$, $Li_2SiS_3$, $Li_4SiO_4$, $Li_4SiO_4$-$LiI$-$LiOH$, $Li_3PO_4$-$Li_2S$-$SiS_2$; a halide; and a sulfate.

The lithium salt may include a material that may be readily soluble in the non-aqueous organic solvent. Examples of the lithium salt may include $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF_e$, $LiSbF_6$, $LiAlCl_4$, $CH_3SO_3Li$, $(CF_3SO_2)_2NLi$, $(FSO_2)_2NLi$, lithium chloroborate, or a combination thereof.

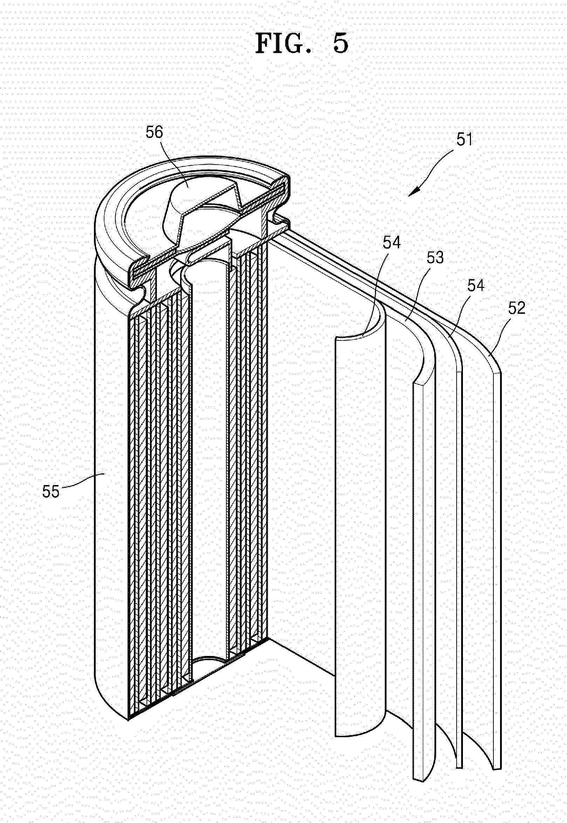

FIG. 5 is a schematic view illustrating an embodiment of a representative structure of a lithium secondary battery.

Referring to FIG. 5, a lithium secondary battery 51 may include a positive electrode 53 according to one or more embodiments, a negative electrode 52, and a separator 54. The positive electrode 53 may include the positive active material according to an embodiment.

The positive electrode 53, the negative electrode 52, and the separator 54 may be wound or folded to form an electrode assembly. Then, the electrode assembly may be sealed in a battery case 55. Depending on a shape of a battery, the separator 54 may be between the positive electrode 53 and the negative electrode to provide a battery assembly in which the positive electrode 53 and the negative electrode 52 are alternately stacked. The battery case 55 may then be filled with an organic electrolyte solution and hermetically sealed with a cap assembly 56, thereby completing the manufacture of the lithium secondary battery 51. The battery case 55 may be a cylindrical type (e.g., a cylindrical kind of battery), a rectangular type (e.g., a rectangular kind of battery), or a thin-film type (e.g., a thin-film kind of battery). For example, the lithium secondary battery 51 may be a large thin-film type battery (e.g., a large thin-film kind of battery). The lithium secondary battery may be a lithium ion battery. The battery assembly may be put into a pouch and impregnated with an electrolyte solution, and then the battery assembly may be sealed, thereby completing the manufacture of a lithium ion polymer battery. In one or more embodiments, a plurality of battery assemblies may be stacked to form a battery pack, which may be used in a device that requires large capacity and high power. For example, the battery pack may be used in a laptop computer, a smart phone, and/or an electric vehicle.

The lithium secondary battery may have improved storage-stability at a high temperature, high-rate characteristics, and lifespan characteristics, and thus may be applied to an electric vehicle (EV). For example, the lithium secondary battery may be utilized in a hybrid vehicle, such as a plug-in hybrid electric vehicle (PHEV).

Hereinafter embodiments will be described in more detail with reference to Examples and Comparative Examples. These examples are for illustrative purposes only and are not intended to limit the scope of the present disclosure.

**Preparation of nickel-based metal precursor**

**Preparation Example 1**

A nickel-based metal precursor ($Ni_{0.92}Co_{0.06}Mn_{0.02}(OH)_2$) was synthesized by coprecipitation.

Nickel sulfate ($NiSO_4 \cdot 8H_2O$), cobalt sulfate ($CoSO_4 \cdot 7H_2O$), and manganese sulfate ($MnSO4 \cdot H_2O$) were dissolved in distilled water, that is, a solvent, to prepare a mixture solution having a molar ratio of Ni:Co:Mn of 92:6:2. To form a complex compound, a dilute aqueous ammonia ($NH_4OH$) solution and sodium hydroxide (NaOH) as a precipitating agent were prepared. Afterwards, the metal raw material mixture solution, ammonia water, and sodium hydroxide were added into a reactor. Sodium hydroxide was added to maintain the pH inside the reactor.

The pH of the mixture was adjusted to 11.7, and the mixture was stirred for 10 hours. Then, the pH of the mixture was adjusted to 11.5 to reduce the pH by about 0.2 based on the initial pH to thereby change a coprecipitation rate. Thus, a difference was generated in a synthesis rate between the inside and outside of the nickel-based lithium metal oxide precursor, thereby obtaining a nickel-based lithium metal oxide precursor having a pore inside.

After the reaction was carried out for about 20 hours while stirring the reaction mixture, input of the raw material solution was stopped.

The slurry solution in the reactor was filtered and washed with high-purity distilled water and dried in a hot air oven at 200 °C for 24 hours to obtain a nickel-based lithium metal oxide precursor ($Ni_{0.92}Co_{0.6}Mn_{0.2}(OH)_2$) having a hollow structure. The nickel-based metal precursor is a secondary particle which is an aggregate of primary particles. The size of each of the primary particles was about 300 nm (0.3 $\mu$m), and an average particle diameter of the secondary particle was about 14 $\mu$m.

**Comparative Preparation Example 1**

A nickel-based metal precursor not having a hollow structure was prepared in substantially the same manner as in Preparation Example 1, except that the pH of the mixture was maintained at 11.7 without change, instead of adjusting the pH of the mixture to 11.5 to reduce the pH by about 0.2 based on the initial pH, after adjusting the pH of the mixture to 11.7 and stirring for 10 hours.

**Preparation of positive active material for lithium secondary battery**

**Example 1**

A first mixture was obtained by adding the nickel-based metal precursor ($Ni_{0.92}Co_{0.06}Mn_{0.02}(OH)_2$) having a hollow structure of Preparation Example 1 and lithium carbonate. In the first mixture, the mixing molar ratio (Li/Me) of lithium to metal is about 1.02. The content of the metal herein refers to the total content of Ni, Co, and Mn.

The first mixture was subjected to primary heat treatment under an oxidative gas atmosphere, for example, in an atmospheric condition at a temperature of 900 °C for 15 hours.

A product having a particle size in a range of 13 $\mu$m to 14 $\mu$m was prepared by disintegration of the primary heat treatment product using a roll crusher (roll spacing of 0.1 mm) and disintegration using a colloidal mill (having an interval less than 100 $\mu$m).

The resulting product of the disintegration was subjected to secondary heat treatment in an oxygen atmosphere at a temperature of about 750° C to prepare a positive active material ($LiNi_{0.92}Co_{0.06}Mn_{0.02}O_2$) having a hollow structure. The positive active material is a secondary particle which is an aggregate of primary particles. The size (average particle diameter) of the primary particle is about 3.5 $\mu$m, the size (average particle diameter) of the secondary particle is about 13 $\mu$m, and the size (average particle diameter) of a pore present inside the positive active material is 3 $\mu$m.

**Examples 2 to 5**

Positive active materials were prepared in substantially the same manner as in Example 1, except that the manufacture of the positive active material was controlled such that a size of each of primary particles, a size of a secondary particle, and a size of a pore inside were as shown in Table 1.

**Comparative Example 1**

A first mixture was obtained by adding the nickel-based metal precursor ($Ni_{0.92}Co_{0.06}Mn_{0.02}(OH)_2$) having a

hollow structure of Preparation Example 1 and lithium carbonate. In the first mixture, the mixing molar ratio (Li/Me) of lithium to metal is about 1.02. The content of the metal herein refers to the total content of Ni, Co, and Mn.

The first mixture was subjected to primary heat treatment in an atmospheric condition at a temperature of 900 °C for 15 hours.

The primary heat treatment product was pulverized using Hosogawa jet mill (blower 35 Hz, AFG 8000 rpm, air 4 kgf/cm$^2$) to prepare a nickel-based lithium metal oxide having a non-hollow structure.

The pulverized nickel-based lithium metal oxide having a non-hollow structure was subjected to secondary heat treatment at a temperature of about 750 °C in an oxygen atmosphere to thereby prepare a positive active material, which is a large particle, having a non-hollow structure.

The positive active material prepared in Comparative Example 1 had pulverized primary particles, however, defects caused during the pulverization were found on surfaces of the pulverized primary particles, and the shape of particles were found to be broken.

**Comparative Example 2**

A nickel-based lithium metal oxide having a non-hollow structure and a positive active material (having a particle size in a range of 3 μm to 4 μm) having a non-hollow structure was prepared in substantially the same manner as in Comparative Example 1, except that secondary heat treatment was not performed.

The positive active material prepared in Comparative Example 2 was essentially subjected to pulverization using a jet mill. The nickel-based lithium metal oxide having a non-hollow structure obtained after pulverization had a small single crystal particle form in a range of 3 μm to 4 μm. Such small single crystal particles were poor in manufacturing processability in mass production due to poor powder flow characteristics. The positive active materials prepared in Comparative Examples 1 and 2 had the shape of pulverized primary particles, but had many defects on the surface thereof, and the shape of the particles was broken. Such defects occurred in the pulverization.

On the other hand, because the positive active material of Example 1 has the shape of a large particle, as compared with the positive active material of Comparative Example 2, a specific surface area was small, and the flowability is excellent. Thus, the mass production processability of the positive active material is improved.

**Comparative Example 3**

A nickel-based lithium metal oxide, and a positive active material which is a crystal particle and having a hollow structure were prepared in substantially the same manner as in Example 1, except that primary heat treatment was performed at a temperature of 750 °C, and secondary heat treatment was performed at a temperature of 900 °C.

When the positive active material was prepared in Comparative Example 3, secondary heat treatment was performed at a higher temperature than primary heat treatment. The positive active material obtained under these heat treatment conditions, as compared with the positive active material of Example 1, had less crystal growth and poor cation mixing ratio characteristics. When the positive active material is prepared in Comparative Example 3, secondary heat treatment is performed at a temperature of 900 °C. Thus, it is difficult for Ni to form a layered structure. Accordingly, a large amount of Ni was phase transitioned to a spinel or cubic phase, and the crystal properties were very different from one another, as compared with the positive active material of Example 1.

**Comparative Example 4 (using a nickel-based metal precursor not having a pore as a starting material)**

A positive active material was prepared in substantially the same manner as in Example 1, except that the nickel-based metal precursor having a non-hollow structure in Comparative Preparation Example 1 was used instead of the nickel-based metal precursor having a hollow structure in Preparation Example 1. The positive active material was a crystal particle and not including a hollow structure thereinside, in which primary particles were dense.

Table 1

| Classification | Positive active material | | | Reaction condition |
|---|---|---|---|---|
| | Size of primary particle (μm) | Size of secondary particle (μm) | Size of pore inside (μm) | |
| Example 1 | 3.5 | 13 | 3 | Primary heat treatment: 900 °C Secondary heat treatment: 750 °C |

(continued)

| Classification | Positive active material | | | Reaction condition |
|---|---|---|---|---|
| | Size of primary particle ($\mu$m) | Size of secondary particle ($\mu$m) | Size of pore inside ($\mu$m) | |
| Example 2 | 2 | 15 | 5 | Same as Example 1, except that the temperature of primary heat treatment was changed to 870 °C |
| Example 3 | 5 | 15 | 5 | Same as Example 1, except that the temperature of primary heat treatment was changed to 930 °C |
| Example 4 | 3.5 | 10 | 5 | Same as Example 1, except that the size of the nickel-based metal precursor was changed to 11 $\mu$m |
| Example 5 | 3.5 | 18 | 5 | Same as Example 1, except that the size of the nickel-based metal precursor was changed to 19 $\mu$m |
| Comparative Example 1 | 3 | 4 | 0 | - |
| Comparative Example 2 | 3 | 3 | 0 | - |
| Comparative Example 4 | 3 | 15 | 0 | - |

**Manufacture Example 1: Manufacture of coin-cell**

A coin-cell was manufactured by using the positive active material prepare in Example 1 as a positive active material without a separate pulverization.

A mixture of 96 g of the positive active material ($LiNi_{0.92}Co_{0.6}Mn_{0.2}O_2$) prepared in Example 1, 2 g of polyvinylidene fluoride, 47 g of N-methyl pyrrolidone as a solvent, and 2 g of carbon black as a conductive agent were mixed by using a mixer to remove bubbles, thereby preparing a slurry for forming a positive active material layer in which the mixture was homogeneously dispersed.

The slurry for forming a positive active material layer was coated onto an aluminium foil using a doctor blade to form a thin plate. The thin plate was dried at 135 °C for 3 hours or more, pressed, and dried in vacuum to prepare a positive electrode.

The positive electrode and a lithium metal counter electrode were used to prepare a 2032 model of coin-cell. A separator formed of a porous polyethylene (PE) film and having a thickness of about 16 $\mu$m was between the positive electrode and the lithium metal counter electrode, and an electrolyte was injected thereto to prepare a 2032 model of coin-cell. Here, the electrolyte was a solution of 1.1 M $LiPF_6$ dissolved in a mixed solvent of ethylene carbonate (EC) and ethyl methyl carbonate (EMC) in a volume ratio of 3:5.

When the coin-cell is manufactured as in Manufacture Example 1, pulverization is not necessary, and aggregated primary particles may be dispersed during pressing. Thus, the productivity may be improved.

**Manufacture Examples 2 to 5: Manufacture of coin-cells**

Coin-cells were manufactured in substantially the same manner as in Manufacture Example 1, except that the positive active materials prepared in Examples 2 to 5 were used instead of the positive active material prepared in Example 1, respectively.

**Comparative Manufacture Example 1: Manufacture of coin-cell**

A coin-cell was manufactured in substantially the same manner as in Manufacture Example 1, except that the positive active material of Comparative Example 1 was used instead of the positive active material of Example 1 as a positive active material.

**Comparative Manufacture Example 2**

A coin-cell was manufactured in substantially the same manner as in Comparative Manufacture Example 1, except that the positive active material prepared in Comparative Example 2 was used instead of the positive active material prepared in Comparative Example 1.

**Comparative Manufacture Example 3**

A coin-cell was manufactured in substantially the same manner as in Comparative Manufacture Example 1, except that the positive active material prepared in Comparative Example 3 was used instead of the positive active material prepared in Comparative Example 1.

**Comparative Manufacture Example 4**

A coin-cell was manufactured in substantially the same manner as in Comparative Manufacture Example 1, except that the positive active material prepared in Comparative Example 4 was used instead of the positive active material prepared in Comparative Example 1.

**Evaluation Example 1: scanning electron microscope (SEM)**

**(1) Example 1 and Comparative Examples 2 to 4**

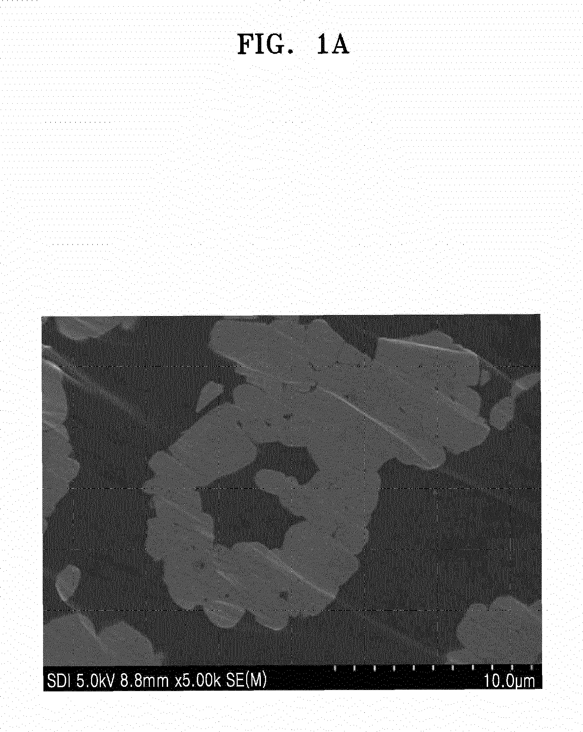

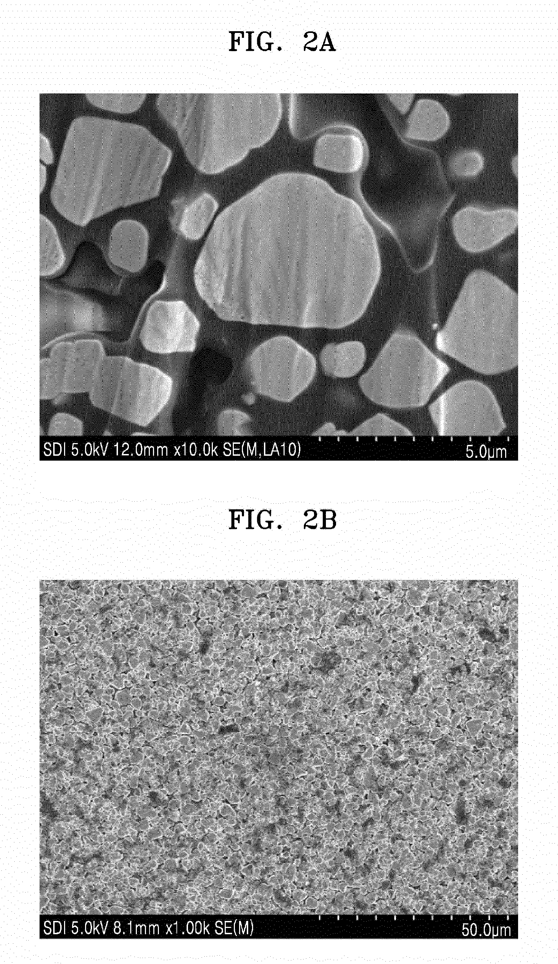

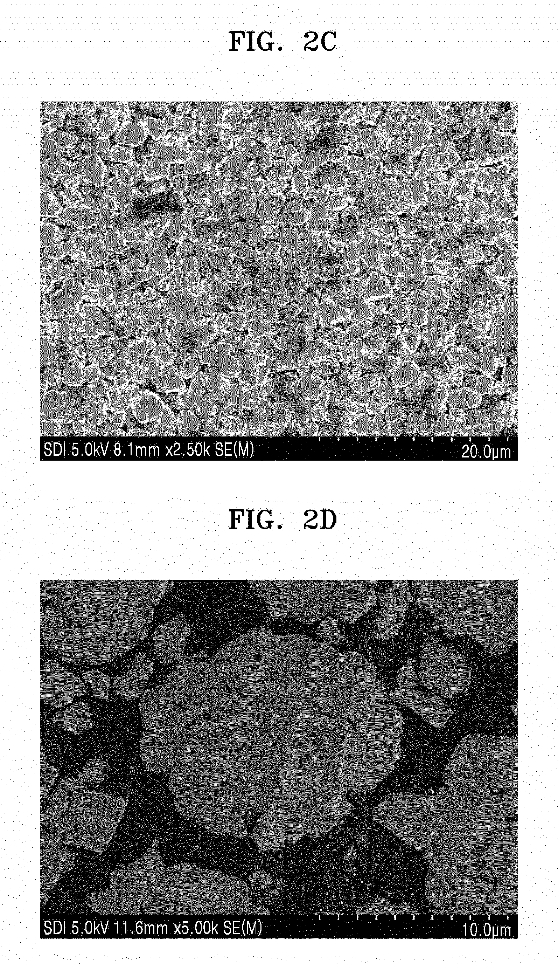

SEM analysis was performed on the positive active materials of Example 1 and Comparative Examples 2 to 4. SEM was performed by using a Magellan 400L (available from FEI company). The analysis results are shown in FIG. 1A and FIGS. 2A-2D.

FIG. 1A is an SEM image of a cross-section of the positive active material prepared in Example 1. FIG. 2A is an SEM image of a cross-section of the positive active material prepared in Comparative Example 2. FIGS. 2B-2C are SEM images of surfaces of the positive active materials prepared in Comparative Example 2 and Comparative Example 3, respectively. FIG. 2D is an SEM image of a cross-section of a positive active material prepared in Comparative Example 4.

As shown in FIG. 1, the positive active material of Example 1 was found to be a secondary particle including large primary particles and having a hollow structure with a pore inside the positive active material. The size of each of the primary particles was about 3.5 $\mu$m, and the size of the secondary particle was about 13 $\mu$m.

However, as shown in FIG. 2A, the positive active material of Comparative Example 2 had small particles (1 $\mu$m to 5 $\mu$m) and did not have a pore. The positive active material of Example 1 is an agglomerate (a secondary particle) before pulverization of small particles (primary particles) of Comparative Examples 2 and 3 shown in FIGS. 2B-2C, respectively.

As shown in FIG. 2D, the positive active material of Comparative Example 4 is in a form of a crystal but is in a dense form without having a hollow structure.

**(2) Preparation Example 1 and Comparative Preparation Example 1**

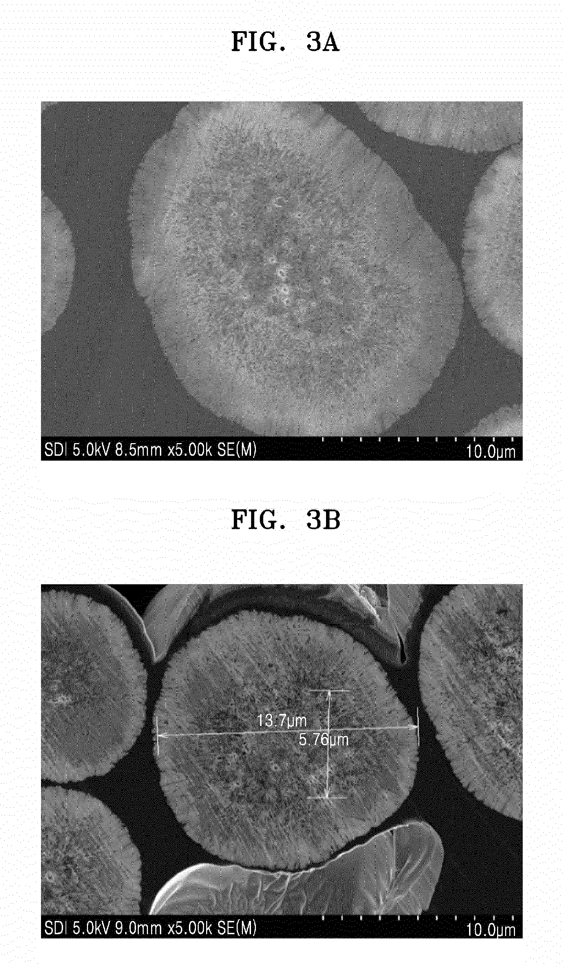

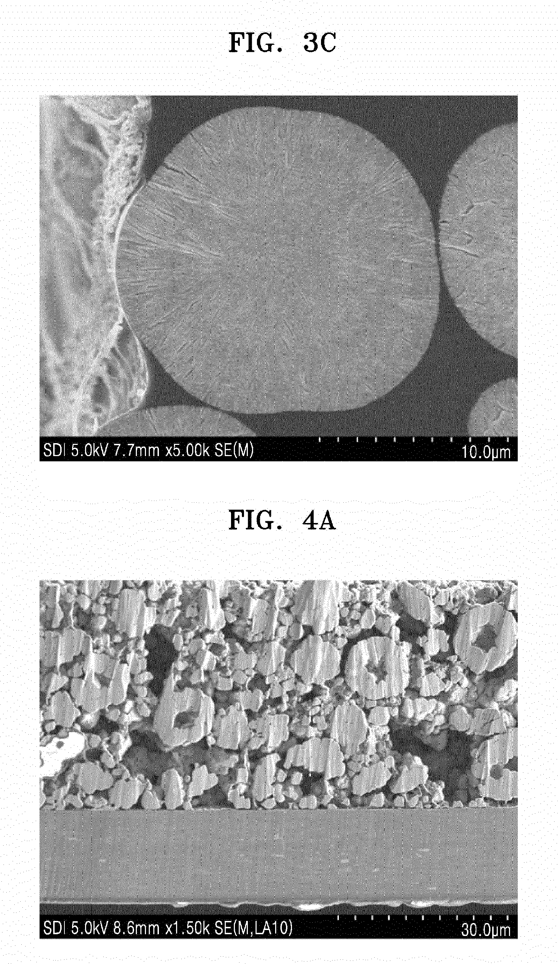

SEM analysis was performed on a cross-section of the nickel-based metal precursors prepared in Preparation Example 1 and Comparative Preparation Example 1. As an SEM, a Magellan 400L (FEI company) was used. The results of SEM analysis on the nickel-based metal precursor prepared in Preparation Example 1 are shown in SEM images in FIGS. 3A-3B, and the results of SEM analysis on the nickel-based metal precursor prepared in Comparative Preparation Example 1 is shown in an SEM image in FIG. 3C.

Referring to FIG. 3A, the nickel-based metal precursor of Preparation Example 1 had a pore inside, the size of each of the primary particles was 0.3 $\mu$m (300 nm), and the size of the secondary particle was 14 $\mu$m. As shown in FIG. 3B, the interior (e.g., a pore area) in which the pore exists had a major axis of about 5.76 $\mu$m and had significant amorphous characteristics.

However, as shown in FIG. 3C, the nickel-based metal precursor of Comparative Preparation Example 1 did not have a structure having a pore inside, unlike the nickel-based metal precursor of Preparation Example 1.

**Evaluation Example 2: Analysis on state of positive electrode after pressing**

SEM analysis was performed to compare the particle size and the presence or absence of a pore after pressing on the positive electrode of Preparation Example 1 and Comparative Preparation Example 4.

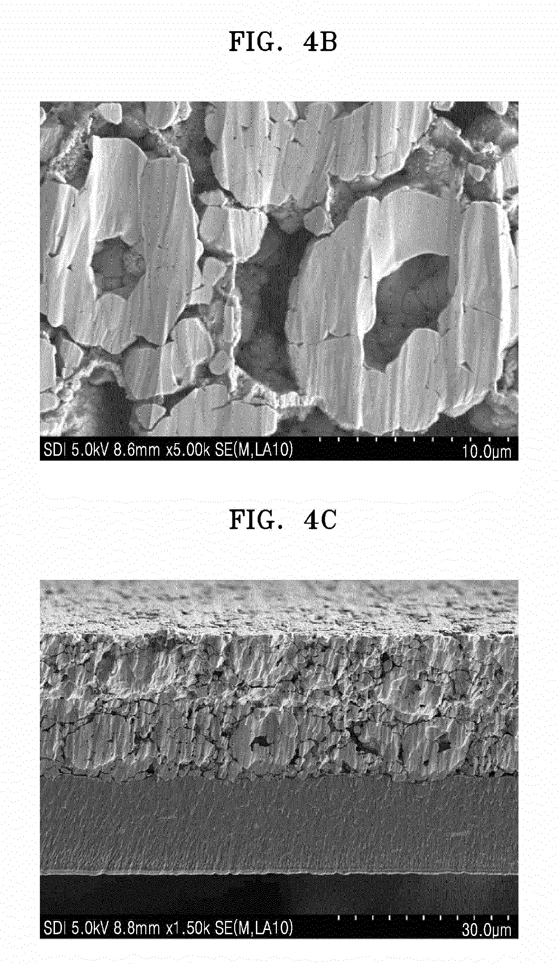

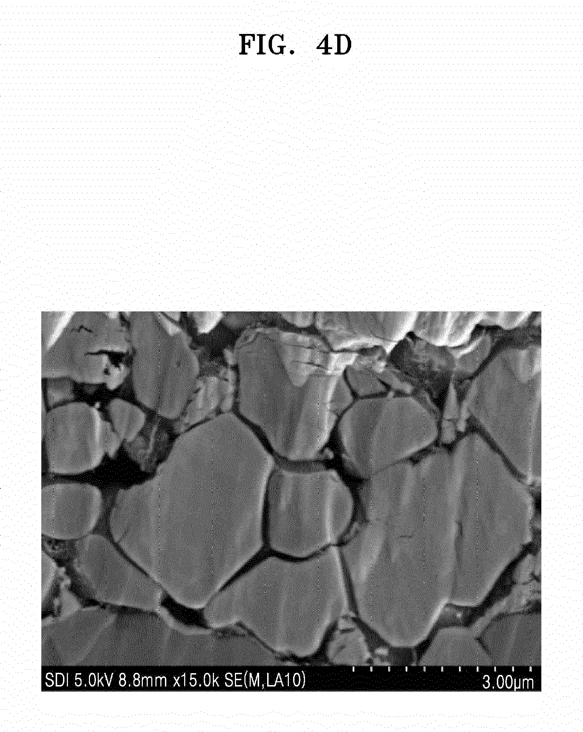

SEM analysis results are shown in FIGS. 4A-4D. FIGS. 4A-4B show the condition before pressing the positive electrode manufactured in Manufacture Example 1. FIG. 4C shows the condition of the positive electrode manufactured in Manufacture Example 1 after pressing. FIG. 4D shows the condition of the positive electrode manufactured in Comparative Manufacture Example 4 after pressing.

After the positive electrode of Manufacture Example 1 is pressed, the positive active material having a pore was disintegrated by the press and dispersed. As a result, as shown in FIG. 4C, the positive active material layer had a bilayer structure. The positive active material layer includes the nickel-based lithium metal oxide secondary particle as a positive active material, and the nickel-based lithium metal oxide secondary particle includes a plurality of large primary particles.

The positive electrode of Manufacture Example 1 contained a mixture of Primary Particles A and Secondary Particle B, which is an aggregate of primary particles. And a pore was found to be present in the positive active material layer. Primary Particles A were a plurality of large primary particles, and Secondary Particle B had a state of the nickel-based lithium metal oxide secondary particles being crushed or broken due to pressing the positive electrode.

In the positive active material layer, it was confirmed that the particles were in a broken state by being more pressurized in the surface portion than in the center portion adjacent to the positive electrode current collector.

As shown in FIG. 4D, in Comparative Manufacture Example 4, unlike the positive electrode of Manufacture Example 1, secondary particle separation did not occur after pressing during the manufacture of the positive electrode, showing a state of a very different positive electrode from the positive electrode of Manufacture Example 1 (see FIG. 4C). When the positive electrode of Comparative Manufacture Example 4 was used, it was found that electrochemical properties were poor, as compared with the positive electrode of Manufacture Example 1.

## Evaluation Example 3: X-ray diffraction analysis

The positive active material prepared according to Example 1 and the positive active materials prepared according to Comparative Examples 1 and 2 were subjected to X-ray diffraction analysis using an X'pert pro (PANalytical) using Cu Ka radiation (1.54056 Å).

In Table 2, $I_{(003)}$ indicates an intensity of the peak corresponding to the (003) plane (peak having $2\theta$ of about 18° to about 19°), and $I_{(104)}$ indicates an intensity of the peak corresponding to the (104) plane ($2\theta$ is about 44.5°). As used herein, $FWHM_{(003)}$ represents a full width at half maximum (FWHM) of a peak corresponding to (003) plane, and $FWHM_{(104)}$ represents a FWHM of a peak corresponding to (104) plane. In Table 2, $A_{(003)}$ indicates an area of a peak corresponding to (003) plane, and $A_{(104)}$ indicates an area of a peak corresponding to (104) plane.

Table 2

| Classification | $FWHM_{(003)}$ (°) | $FWHM_{(003)}/FWHM_{(104)}$ | $I_{(003)}/I_{(104)}$ | $A_{(003)}/A_{(104)}$ |
|---|---|---|---|---|
| Example 1 | 0.0807 | 0.85 | 1.79 | 1.35 |
| Comparative Example 1 | 0.0818 | 0.73 | 1.66 | 1.21 |
| Comparative Example 2 | 0.0805 | 0.79 | 1.65 | 1.23 |

The positive active material of Example 1 was found to be a crystal in view of the characteristics of $FWHM_{(003)}$ and $FWHM_{(003)}/FWHM_{(104)}$ in Table 2. The positive active material of Example 1 did not undergo a pulverization process. Thus, crystal of the positive active material was less damaged. Accordingly, the positive active material of Example 1 was found to have excellent crystallinity, as compared with Comparative Examples 1 and 2. The reduced damage of the crystal of the positive active material can be identified by the values of $FWHM_{(003)}$ and $FWHM_{(003)}/FWHM_{(104)}$. The lower the $FWHM_{(003)}$, the larger and more uniform the grains of the active material grew in the (003) direction. The higher the ratio of $FWHM_{(003)}/FWHM_{(104)}$, the larger and more uniform the crystal structure grew in the (104) direction.

As shown in Table 2, the positive active material of Example 1 was found to have an increased $I_{(003)}/I_{(104)}$ and $A_{(003)}/A_{(104)}$ value and a reduced cation mixing ratio, as compared with the positive active materials of Comparative Examples 1 and 2, thereby realizing large capacity.

## Evaluation Example 4: Charge/discharge characteristics

The charging and discharging characteristics of the coin-cells manufactured in Manufacture Example 1, Comparative Manufacture Example 1, Comparative Manufacture Example 2, and Comparative Manufacture Example 4 were evaluated by using a charger and discharger (TOYO-3100, available from: TOYO SYSTEM Co., Ltd.).

In the first charging and discharging cycle, each coin-cell was charged at a constant current of 0.1 C at a temperature of 25 °C until the voltage reached 4.25 V. Then, each coin-cell was charged at a constant voltage until the current reached 0.05 C. After charging was completed, each cell was subjected to a rest period of about 10 minutes, and then subjected to constant current discharge at a current of 0.1 C until the voltage reached 3 V. In the second charging and discharging cycle, each coin-cell was charged at a constant current of 0.2 C until the voltage reached 4.25 V. Then, each coin-cell was charged at a constant voltage until the current reached 0.05 C. After charging was completed, each cell was subjected to a rest period of about 10 minutes, and then subjected to constant current discharge at a current of 0.2 C until the voltage reached 3 V.

Lifespan evaluation was carried out in that each coin-cell was charged at a constant current of 1 C until the voltage reached 4.3 V. Then, each coin-cell was charged at a constant voltage until the current reached 0.05 C. After charging was completed, each cell was subjected to a rest period of about 10 minutes, and then subjected to constant current discharge at a current of 1 C until the voltage reached 3 V. This cycle of charging and discharging was repeated 50 times.

The capacity retention ratio (CRR) was calculated from Equation 2, the charging and discharging efficiency was calculated from Equation 3, and CRR, charging and discharging efficiency characteristics were evaluated and shown in Table 3.

Equation 2

$$\text{Capacity retention (\%)} = (\text{discharge capacity at the 50}^{\text{th}} \text{ cycle/ discharge capacity at the 1}^{\text{st}} \text{ cycle}) \times 100\ \%$$

Equation 3

$$\text{charging and discharging efficiency (\%)} = (\text{discharge voltage at the 1}^{\text{st}} \text{ cycle/charge voltage at the 1}^{\text{st}} \text{ cycle}) \times 100\ \%$$

Table 3

| Classification | Charging and discharging efficiency (%) | Capacity retention ratio (%) |
|---|---|---|
| Manufacture Example 1 | 88 | 94 |
| Comparative Manufacture Example 1 | 87 | 94 |
| Comparative Manufacture Example 2 | 89 | 94 |
| Comparative Manufacture Example 4 | 87 | 88 |

Referring to the results of Table 3, the coin-cell manufactured in Manufacture Example 1 was found to have improved charging and discharging efficiency and CRR, as compared with the coin-cell manufactured in Comparative Manufacture Example 4. The coin-cell of Manufacture Example 1 was found to have substantially the same level of charging and discharging efficiency and CRR, as compared with the coin cells of Comparative Manufacture Examples 1 and 2, but the coin-cell of Manufacture Example 1 may be easily mass-produced, because the particle flow of the positive active material is greatly improved, as compared with the coin cells of Comparative Manufacture Examples 1 and 2 which were subjected to pulverization. In addition, pulverization of the positive active material may be omitted, aggregation between particles may be suppressed or reduced, productivity may be improved, and the cation mixing ratio may be reduced, such that a positive active material for a one body lithium secondary battery having large capacity may be prepared.

When the positive active material for a lithium secondary battery is used, pulverization of the positive active material may be omitted, aggregation between particles may be suppressed or reduced, productivity may be improved, and a cation mixing ratio may be reduced, such that a positive active material for a one body lithium secondary battery having large capacity may be prepared. A lithium secondary battery manufactured using such a positive active material for a lithium secondary battery may have improved charging and discharging efficiency.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made thereinside without departing from the scope of the present disclosure as defined by the following claims, and equivalents thereof.

**Claims**

1. A positive active material for a lithium secondary battery, the positive active material comprising:

   a nickel-based lithium metal oxide secondary particle comprising a plurality of large primary particles, wherein the nickel-based lithium metal oxide secondary particle has a hollow structure having a pore inside, a size of the large primary particles is in a range of about 2 micrometers ($\mu$m) to about 6 $\mu$m, and a size of the nickel-based lithium metal oxide secondary particle is in a range of about 10 $\mu$m to about 18 $\mu$m.

2. The positive active material of claim 1, wherein a size of the pore inside the positive active material is in a range of about 2 $\mu$m to about 7 $\mu$m.

3. The positive active material of claim 1 or claim 2, wherein the nickel-based lithium metal oxide comprises a compound represented by Formula 1:

   $$\text{Formula 1} \qquad Li_a(Ni_{1-x-y}M1_xM2_y)O_{2\pm\alpha1}$$

   wherein, in Formula 1, M1 comprises at least one element selected from cobalt (Co), manganese (Mn), and aluminium (Al),
   M2 comprises at least one element selected from the group consisting of boron (B), magnesium (Mg), calcium (Ca), strontium (Sr), barium (Ba), titanium (Ti), vanadium (V), chromium (Cr), iron (Fe), copper (Cu), and zirconium (Zr), and
   $0.95 \leq a \leq 1.1$, $0.6 \leq (1-x-y) < 1$, $0 \leq x < 0.4$, $0 \leq y < 0.4$, and $0 \leq \alpha1 \leq 0.1$, excluding a case where x and y are both 0, optionally wherein:
   the nickel-based lithium metal oxide comprises a compound represented by Formula 2:

   $$\text{Formula 2} \qquad Li_a(Ni_{1-x-y-z}Co_xM3_yM4_z)O_{2\pm\alpha1}$$

   wherein, in Formula 2, M3 comprises at least one element selected from Mn and Al,
   M4 comprises at least one element selected from the group consisting of B, Mg, Ca, Sr, Ba, Ti, V, Cr, Fe, Cu, and Zr, and
   $0.95 \leq a \leq 1.1$, $0.6 \leq (1-x-y-z) < 1$, $0 \leq x < 0.4$, $0 \leq y < 0.4$, $0 \leq z < 0.4$, and $0 \leq \alpha1 \leq 0.1$, excluding a case where x, y, and z are all 0.

4. The positive active material of any one of claims 1 to 3, wherein:

   (i) a size of the large primary particles is in a range of about 2 $\mu$m to about 4 $\mu$m, and a size of the nickel-based lithium metal oxide secondary particle is in a range of about 12 $\mu$m to about 18 $\mu$m; and/or
   (ii) a peak intensity ratio $I_{(003)}/I_{(104)}$ of the positive active material measured by X-ray diffraction analysis is in a range of about 1.2 to about 4.0, and
   wherein $I_{(003)}$ is a peak intensity of a (003) plane, and $I_{(104)}$ is a peak intensity of a (104) plane; and/or
   (iii) an area ratio $A_{(003)}/A_{(104)}$ of the positive active material measured by X-ray diffraction analysis is in a range of about 1.1 to about 1.4, wherein $A_{(003)}$ is an area of a peak corresponding to (003) plane, and $A_{(104)}$ is an area of a peak corresponding to (104) plane; and/or
   (iv) $FWHM_{(003)}/FWHM_{(104)}$ of the positive active material measured by X-ray diffraction analysis is in a range of about 0.80 to about 0.87, wherein $FWHM_{(003)}$ is a full width at half maximum of a peak corresponding to (003) plane, and $FWHM_{(104)}$ is a full width at half maximum of a peak corresponding to (104) plane.

5. The positive active material of any one of claims 1 to 4, wherein the nickel-based lithium metal oxide secondary particle comprises 2 or fewer large primary particle layers.

6. A method of preparing a positive active material for a lithium secondary battery, the method comprising:

obtaining a first mixture by mixing at least one selected from a nickel precursor, an M1 precursor, and an M2 precursor together with a basic solution, followed by coprecipitation of the first mixture and drying of the resultant, to thereby obtain a nickel-based metal precursor having a pore inside;

obtaining a second mixture of the nickel-based metal precursor having a pore inside and a lithium precursor;

performing primary heat treatment on the second mixture; and

performing secondary heat treatment on a product of the primary heat treatment to thereby prepare the positive active material according to any one of claims 1 to 9,

wherein the primary heat treatment is performed at a temperature higher than the secondary heat treatment,

the M1 precursor comprises at least one selected from a cobalt precursor, a manganese precursor, and an aluminium precursor, and

the M2 precursor comprises a precursor comprising at least one element selected from the group consisting of boron (B), magnesium (Mg), calcium (Ca), strontium (Sr), barium (Ba), titanium (Ti), vanadium (V), chromium (Cr), iron (Fe), copper (Cu), and zirconium (Zr).

7. The method of claim 6, wherein the nickel-based metal precursor having a pore inside is in an amorphous state, the nickel-based metal precursor comprises a secondary particle, and a size of the secondary particle is in a range of about 10 $\mu$m to about 18 $\mu$m.

8. The method of claim 6 or claim 7, wherein the nickel-based metal precursor comprises a compound represented by Formula 3, a compound represented by Formula 4, or a combination thereof:

$$\text{Formula 3} \qquad (Ni_{1-x-y}M1_xM2_y)(OH)_2$$

wherein, in Formula 3, M1 comprises at least one element selected from cobalt (Co), manganese (Mn), and aluminium (Al),

M2 comprises at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), and

$0.6 \leq (1-x-y) < 1$, $0 \leq x < 0.4$, and $0 \leq y < 0.4$, excluding a case where x and y are both 0, and

$$\text{Formula 4} \qquad (Ni_{1-x-y})M_xM2_y)O$$

wherein, in Formula 4, M1 comprises at least one element selected from cobalt (Co), manganese (Mn), and aluminium (Al),

M2 comprises at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), and

$0.6 \leq (1-x-y) < 1$, $0 \leq x < 0.4$, and $0 \leq y < 0.4$, excluding a case where x and y are both 0.

9. The method of claim 6 or claim 7, wherein the nickel-based metal precursor comprises a compound represented by Formula 5, a compound represented by Formula 6, or a combination thereof:

$$\text{Formula 5} \qquad Ni_{1-x-y-z}Co_xM3_yM4_z(OH)_2$$

wherein, in Formula 5, M3 comprises at least one element selected from Mn and Al,

M4 comprises at least one element selected from the group consisting of B, Mg, Ca, Sr, Ba, Ti, V, Cr, Fe, Cu, Zr, and Al, and

$0.6 \leq (1-x-y-z) < 1$, $0 \leq x < 0.4$, $0 \leq y < 0.4$, and $0 \leq z < 0.4$, excluding a case where x, y, and z are all 0, and

$$\text{Formula 6} \qquad (Ni_{1-x-y-z}Co_xM3_yM4_z)O$$

wherein, in Formula 6, M3 comprises at least one element selected from Mn and Al,

M4 comprises at least one element selected from the group consisting of B, Mg, Ca, Sr, Ba, Ti, V, Cr, Fe, Cu, and Zr, and

$0.6 \leq (1-x-y-z) < 1$, $0 \leq x < 0.4$, $0 \leq y < 0.4$, and $0 \leq z < 0.4$, excluding a case where x, y, and z are all 0.

10. The method of any one of claims 6 to 9, wherein:

(i) the nickel-based metal precursor is mixed together with the lithium precursor such that a molar ratio (Li/Me) of Li to metals other than Li is about 0.9 or more and less than about 1.1; and/or
(ii) the lithium precursor comprises lithium hydroxide, lithium carbonate, lithium sulfate, lithium nitrate, or a combination thereof.

11. The method of any one of claims 6 to 10, wherein:

(i) the primary heat treatment is performed under an oxidative gas atmosphere at a temperature of about 800 °C to about 1,200 °C; and/or
(ii) the secondary heat treatment is performed under an oxidative gas atmosphere at a temperature of about 600 °C to about 900 °C.

12. The method of any one of claims 6 to 11, further comprising disintegrating the second mixture, after performing the primary heat treatment on the second mixture.

13. A positive electrode for a lithium secondary battery comprising:

a positive electrode current collector and a positive active material layer on the positive electrode current collector, wherein the positive active material layer comprises

i) the positive active material according to any one of claims 1 to 9, and ii) at least one selected from a large particle having the same composition as the positive active material, and an agglomeration thereof.

14. The positive electrode of claim 13, wherein:

(i) the positive active material has a pore having a size in a range of about 0.5 $\mu$m to about 5 $\mu$m; and/or
(ii) the positive electrode comprises the large particle in a surface portion and a center portion adjacent to the positive electrode current collector, and the large particle is present in the surface portion in an amount greater than that of the center portion; and/or
(iii) the positive electrode comprises the positive active material having a hollow structure in a center portion adjacent to the positive electrode current collector and in a surface portion, and the positive active material having a hollow structure is present in the center portion in an amount greater than that of the surface portion; and/or
(iv) the positive electrode comprises 2 or fewer positive active material layers.

15. A lithium secondary battery comprising:

the positive electrode of claim 13 or claim 14;
a negative electrode; and
an electrolyte between the positive electrode and the negative electrode.

# FIG. 1A

SDI 5.0kV 8.8mm x5.00k SE(M)　　　　　10.0μm

## FIG. 1B

## FIG. 1C

# FIG. 2A

SDI 5.0kV 12.0mm x10.0k SE(M,LA10)                    5.0μm

# FIG. 2B

SDI 5.0kV 8.1mm x1.00k SE(M)                         50.0μm

# FIG. 2C

SDI 5.0kV 8.1mm x2.50k SE(M)    20.0μm

# FIG. 2D

SDI 5.0kV 11.6mm x5.00k SE(M)    10.0μm

# FIG. 3A

SDI 5.0kV 8.5mm x5.00k SE(M)                                    10.0μm

# FIG. 3B

SDI 5.0kV 9.0mm x5.00k SE(M)                                    10.0μm

## FIG. 3C

SDI 5.0kV 7.7mm x5.00k SE(M)          10.0μm

## FIG. 4A

SDI 5.0kV 8.6mm x1.50k SE(M,LA10)          30.0μm

## FIG. 4B

SDI 5.0kV 8.6mm x5.00k SE(M,LA10)    10.0μm

## FIG. 4C

SDI 5.0kV 8.8mm x1.50k SE(M,LA10)    30.0μm

# FIG. 4D

SDI 5.0kV 8.8mm x15.0k SE(M,LA10)    3.00μm

# FIG. 5

Europäisches
Patentamt

European
Patent Office

Office européen
des brevets

## EUROPEAN SEARCH REPORT

Application Number

**EP 22 18 1974**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2001 085006 A (TOYOTA CENTRAL RES & DEV) 30 March 2001 (2001-03-30) | 1-5, 13-15 | INV.<br>C01G53/04<br>H01M4/505<br>H01M4/525<br>H01M10/0525 |
| Y | * paragraph [0052] – paragraph [0056]; examples 3,7; table 1 * | 6-12 | |
| | ----- | | |
| Y | EP 3 640 215 A1 (SAMSUNG SDI CO LTD [KR]) 22 April 2020 (2020-04-22) | 6-12 | |
| | * paragraph [0088] – paragraph [0090] * | | |
| | ----- | | |

TECHNICAL FIELDS
SEARCHED      (IPC)

C01G
H01M

The present search report has been drawn up for all claims

| Place of search | Date of completion of the search | Examiner |
|---|---|---|
| Munich | 18 November 2022 | Bonneau, Sébastien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 22 18 1974

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2022

| Patent document cited in search report | | Publication date | Patent family member(s) | | Publication date |
|---|---|---|---|---|---|
| JP 2001085006 | A | 30-03-2001 | NONE | | |
| EP 3640215 | A1 | 22-04-2020 | CN | 111056577 A | 24-04-2020 |
| | | | EP | 3640215 A1 | 22-04-2020 |
| | | | JP | 6932168 B2 | 08-09-2021 |
| | | | JP | 2020064858 A | 23-04-2020 |
| | | | US | 2020119351 A1 | 16-04-2020 |

EPO FORM P0459

For more details about this annex : see Official Journal of the European Patent Office, No. 12/82